# EUROPÄISCHE PATENTSCHRIFT

(11) **EP 0 605 773 B1**
(45) Veröffentlichungstag und Bekanntmachung des Hinweises auf die Patenterteilung: **21.01.1998**
(21) Anmeldenummer: 93118276.0
(22) Anmeldetag: 11.11.1993
(51) Int. Cl.: B23Q 39/02, B23C 3/12, B29C 37/04

(54) **Vorrichtung zum Bearbeiten der Eckverbindungen von Rahmen**
Device for machining window corners
Dispositif pour usiner les coins d'un cadre

(30) Priorität: 11.11.1992 DE 4237939
(43) Veröffentlichungstag der Anmeldung: 13.07.1994
(73) Patentinhaber: ROTOX GmbH B. EISENBACH, D-65611 Brechen (DE)
(72) Erfinder: Eisenbach, Bernd, D-65611 Brechen (DE); Niewrzoll, Peter, D-65554 Limburg a. d. Lahn (DE)
(74) Vertreter: Müller, Eckhard, Dr.

(56) Entgegenhaltungen:
- EP-A- 0 325 264
- DE-A- 1 952 050
- DE-A- 4 109 749
- DE-U- 8 333 479
- GB-A- 2 118 605

## Beschreibung

Die Erfindung bezieht sich auf eine Vorrichtung zum Bearbeiten der Eckenverbindungen von aus Profilstücken geschweißten Rahmen, wie bspw. Fenster- oder Türrahmen, gemäß dem Oberbegriff des Anspruchs 1 (siehe GB-A-2118605).

Aus der GB-A-2118605 ist bereits eine Vorrichtung zum Füllen von Abstandhalterrahmen für Isolierglas mit hygroskopischem Material bekannt mit mindestens einem revolverkopfartig ausgebildeten Werkzeugträger und mehreren auf einem Kreisumfang am Werkzeugträger angeordneten Bearbeitungswerkzeugen, wie bspw. Bohrer zum Herstellen einer Öffnung in der Außenwand des Abstandhalterrahmens, eine Düse zum Einfüllen des hygroskopischen Materials in den Abstandshalterrahmen und eine Düse zum Versiegeln der Einfüllöffnung. Das Werkstück ist zwischen zwei Säulen gehalten, wobei an einer der Säulen der Werkzeugträger vermittels eines Schlittens auf und ab verschiebbar ist, so daß der Abstandhalterrahmen mit seiner oberen Ecke in den Wirkungsbereichs des Bearbeitungswerkzeuges gelangt. Durch Drehen des revolverkopfartig ausgebildeten Werkzeugkopfes können die unterschiedlichen Bearbeitungswerkzeuge in Position an das Werkstück gefahren werden. Wenigstens eine der beiden Säulen ist relativ zu anderen verschiebbar, so daß die Vorrichtung an die Abmessungen des zu bearbeitenden Abstandhalterrahmens angepaßt werden kann.

Speziell zum Bearbeiten der Eckenverbindungen von Rahmen ist es bereits bekannt, mehrere Profilfräser zum Bearbeiten des Rahmenaußenecks auf einem Teller anzuordnen. Durch Drehung des Tellers wird dann der für das jeweilige Rahmenprofil passende Profilfräser ausgewählt und durch eine Vorschubbewegung des gesamten Tellers in Richtung des Rahmenecks zum Einsatz gebracht. Zur vollständigen Bearbeitung eines Fenster- oder Türrahmens müssen aber noch weitere Werkzeuge eingesetzt werden, um bspw. das Rahmeninneneck oder etwa die Sichtflächen zu bearbeiten, ebenso wie für die Einbringung von Dichtungsnuten zusätzliche Bohrer erforderlich sind. Im Hinblick auf eine möglichst automatische Bearbeitung der Fensterrahmen wurde bereits versucht, die erforderlichen Werkzeuge einzeln in Reihe nebeneinander anzuordnen. Aufgrund der Abmessungen der Werkzeuge können diese jedoch nicht beliebig nahe nebeneinander plaziert werden, so daß die Verfahrwege, um die jeweils erforderlichen Werkzeuge bis zur fertigen Bearbeitung des Rahmenecks nacheinander zum Einsatz zu bringen, entsprechend groß sind. Hierdurch ergeben sich relativ lange Taktzeiten zur Bearbeitung eines Fensterrahmens. Ein weiterer Nachteil dieser linearen Aufreihung der Werkzeuge nebeneinander ist, daß aufgrund der Abmessungen der Werkzeuge das Kleinstmaß der noch zu bearbeitenden Rahmen erheblich eingeschränkt ist.

Davon ausgehend liegt der Erfindung die Aufgabe zugrunde, eine Vorrichtung der eingangs genannten Art dahingehend weiterzubilden, daß bei einfachem konstruktiven Aufbau eine schnelle Bearbeitung des jeweiligen Werkstückes, insbesondere eines Fenster- oder Türrahmens, mit kurzen Verfahrwegen für die Bearbeitungswerkzeuge und möglichst eng beianderliegenden Bearbeitungsstellen am Werkstück ermöglicht ist.

Gelöst wird diese Aufgabe durch die Merkmale des Anspruches 1. Vorteilhafte Ausgestaltungen finden sich in den Unteransprüchen.

Nach der Erfindung werden die Bearbeitungswerkzeuge von einer radial zurückgezogenen Ausgangsposition an dem Werkzeugträger in eine radial äußere Bearbeitungsposition verschiebbar sind. Hierdurch können die einzelnen am Werkzeugträger angeordneten Bearbeitungswerkzeuge in ihrer Ausgangsstellung relativ eng nebeneinander angeordnet sein. Der Revolverkopf kann damit äußerst klein in seinen Abmessungen gehalten werden, so daß auch Rahmen mit kleinen Abmessungen problemlos bearbeitet werden können. Die geringe Baugröße des Werkzeugträgers bzw. des Revolverkopfes führt neben einer Kostenreduzierung bei der Herstellung der Maschine aber auch zu kleineren Verfahrwegen im Vergleich zu den bekannten Eckenputzvorrichtungen, was die Taktzeit zur Bearbeitung eines Rahmens noch verkürzt.

In einer ersten besonderen Ausführungsform der Erfindung ist es vorgesehen, daß die Bearbeitungswerkzeuge in einem Winkel von 45° oder einem Vielfachen davon an dem Werkzeugträger angeordnet sind. Hierdurch ist bei den häufig vorkommenden Rahmen mit auf 45°-Gehrung geschnittenen und an ihren Stoßstellen verschweißten Profilschenkeln eine selbsttätige Zustellung insbesondere der richtungs- und profilbezogenen Bearbeitungswerkzeuge erreicht.

Nach einer weiteren Ausgestaltung der Erfindung ist es vorgesehen, daß der Werkzeugkopf lediglich mit einem Drehwinkel von 45° oder einem Vielfachen davon verdrehbar ist, so daß in steuerungstechnisch einfacher Weise die Zustellung insbesondere der richtungsbezogenen Bearbeitungswerkzeuges ermöglicht ist.

Gemäß einer Ausführungsform der Erfindung ist der Werkzeugträger in drei senkrecht aufeinanderstehenden Richtungen verfahrbar. Durch den zusätzlichen Freiheitsgrad in der Bewegung des Werkzeugträgers neben seiner Verfahrbarkeit in der Rahmenebene können nahezu alle Arbeiten an einem Rahmen durchgeführt werden, was die Einsatzmöglichkeiten der erfindungsgemäßen Vorrichtung im Hinblick auf eine vollautomatische Bearbeitung von Fensterrahmen in einer Fertigungsstraße unterstreicht.

Selbstverständlich ist es auch möglich, daß der Werkzeugträger entlang der Längs- und Querseiten des Rahmens verfahrbar ist oder umgekehrt der Rahmen längs der Bearbeitungseinheit transportiert und dabei bearbeitet wird. Hierdurch können Schlitze, Bohrungen für Türschlösser, Wasserschlitze, Befestigungsbohrungen für Griffoliven u. dgl. problemlos eingearbeitet werden.

In einer konstruktiv einfachen Ausgestaltung der Erfindung ist es vorgesehen, daß die Bearbeitungswerkzeuge, vorzugsweise lösbar, an Werkzeughaltern angeordnet sind, welche in schräg von oben nach unten am Werkzeugträger verlaufenden Führungen mittels einer Antriebseinrichtung von der Ausgangsposition nach unten bzw. nach oben in die jeweilige Bearbeitungsposition verschiebbar sind.

Das Verfahren der Bearbeitungswerkzeuge von ihrer radial nach innen zurückgezogenen Ausgangsposition zu der radial äußeren Bearbeitungsposition kann in einfacher Weise dadurch erreicht werden, daß der Werkzeugträger selbst im Querschnitt konisch ausgebildet ist und die Führungen für die Werkzeughalter am bzw. im Mantel des Werkzeugträgers vorgesehen sind.

Gemäß einer Ausgestaltung der Erfindung kann die Antriebseinrichtung für das Verschieben der Bearbeitungswerkzeuge von der radial innenliegenden Ausgangsstellung zur radial äußeren Bearbeitungsposition durch wenigstens einen, vorzugsweise zwei gegenüber dem Werkzeugträger feststehend angeordnete Antriebseinheiten gebildet sein, welche in einem Winkel von 90° zueinander angeordnet sind und deren Betätigungselemente an dem jeweiligen Bearbeitungswerkzeug angreifen. Diese beiden, an der Rotation des Werkzeugkopfes nicht teilnehmenden Antriebseinheiten genügen, um alle Werkzeuge des Werkzeugträgers, auch diejenigen mit einer bzgl. einer 45°-Gehrung des jeweiligen Rahmens erforderlichen Ausrichtung, zu betätigen. Die Antriebseinheiten können bspw. als Pneumatik-Zylinder ausgebildet sein, welche mit ihren Kolbenstangen in eine Aufnahme des Werkzeuges bzw. des Werkzeughalters einklinken oder eingreifen, um dieses von seiner zurückgezogenen Ausgangsposition in die Bearbeitungsposition und wieder zurück zu verschieben.

Die Vorschubbewegung des Werkzeugträgers in den wenigstens zwei Verfahrrichtungen kann bspw. mittels auf Schienenbahnen geführten Schlitten erfolgen.

In vorteilhafter Weise erfolgt die Vorschubbewegung des Werkzeugträgers in Richtung parallel zur Rahmenebene und senkrecht dazu mittels eines Kreuzschlittens. Hierdurch ist der konstruktive Aufwand für die Durchführung der Vorschubbewegungen erheblich reduziert.

Die erfindungsgemäße Vorrichtung läßt sich mit Vorteil auch für die gleichzeitige oder zeitversetzte Bearbeitung von Ober- und Unterseite des jeweiligen Rahmenecks anpassen, indem zwei in Abstand voneinander angeordnete Bearbeitungseinheiten mit Werkzeugträger, Bearbeitungswerkzeugen und Antriebseinheiten für die Vorschubbewegungen vorgesehen sind. Hierdurch kann der Rahmen, ohne gewendet zu werden, fertig bearbeitet werden. Auch sind die Bearbeitungsmöglichkeiten insgesamt wesentlich ausgedehnt, indem bspw. unterschiedliche Bearbeitungswerkzeuge an der oberen und der unteren Bearbeitungseinheit angebracht werden.

Die Werkzeugträger der beiden Bearbeitungseinheiten können nach einer bevorzugten Ausführungsform der Erfindung an einem gemeinsamen Trägerteil angeordnet sein, welches mittels eines Antriebes wenigstens in der Ebene parallel zur Rahmenebene verfahrbar ist.

Nach einer weiteren Ausgestaltung der Erfindung kann die Bearbeitung des Rahmenecks auf seiner Ober- und Unterseite gleichzeitig erfolgen, indem die Bearbeitungseinheiten senkrecht zur Rahmenebene unabhängig voneinander verfahrbar sind.

Selbstverständlich ist es nach der Erfindung auch möglich, daß die Vorrichtung wenigstens als Zweikopf-Maschine mit zwei seitlich des Rahmens angeordneten Bearbeitungseinheiten ausgebildet ist. Bei einer Zweikopf-Maschine, wie sie bspw. in der DE 38 01 641 A1 beschrieben ist, werden zwei Rahmenecken gleichzeitig, ggf. auch auf ihren Ober- und Unterseiten bearbeitet. Die Vorrichtung nach der Erfindung läßt sich aber auch bspw. als Vierkopf-Maschine ausführen. Durch die erfindungsgemäße Ausgestaltung des Werkzeugträgers ist es bei derartigen Mehrkopf-Maschinen nunmehr möglich, Rahmen mit extrem kleinen Außenmaßen zu bearbeiten, da sich die gegenüberliegenden Werkzeugträger infolge ihrer äußerst geringen Abmessungen nicht behindern. Auch wirkt sich dabei die erfindungsgemäße Maßnahme, wonach sich die Bearbeitungswerkzeuge in Ruhelage in einer zurückgezogenen Ausgangsstellung befinden und zur Bearbeitung nach radial außen gefahren werden, besonders vorteilhaft im Hinblick auf die Verfahrenswege der Werkzeuge aus.

Die erfindungsgemäße Vorrichtung läßt sich auch zur Bearbeitung der Randbereiche von Plattenelementen, wie bspw. von Türen, Seitenteilen von Schränken usw. einsetzen, um bspw. Topfbandbohrungen für Schlösser, Beschläge oder Drehknöpfe in Türelemente oder etwa Sacklöcher für Halterungen von Regalböden in die Regal-Seitenwände einzubringen.

Die Erfindung wird nachfolgend anhand der in den Zeichnungen dargestellten Ausführungsbeispiele näher beschrieben.

Es zeigen:
- Figur 1: eine mögliche Ausführungsform eines erfindungsgemäßen Werkzeugträgers für eine Eckenputzmaschine,
- Figur 2: die Draufsicht auf den Werkzeugträger gemäß Figur 1,
- Figur 3: eine mögliche Ausführungsform der Erfindung mit zwei im vertikalen Abstand voneinander angeordneten Werkzeugträgern zur Bearbeitung der Ober- und Unterseite eines Rahmenecks,
- Figuren 4a bis 4d: die einzelnen Arbeitsstellungen einer erfindungsgemäßen Bearbeitungseinheit zur Bearbeitung eines Fensters mit Mittelsprosse,
- Figuren 5a bis 5d: die gleichen Arbeitsschritte gemäß Figuren 4a bis 4d, jedoch bei Einsatz von zwei Bearbeitungseinheiten,
- Figur 6: ein an einem Werkzeugträger angeordnetes Bearbeitungswerkzeug für die Sichtflächenbearbeitung in Bearbeitungsposition an einer Rahmen-Mittelsprosse und
- Figur 7: eine Darstellung ähnlich Figur 6, jedoch mit einem Bearbeitungswerkzeug für die Inneneckbearbeitung.

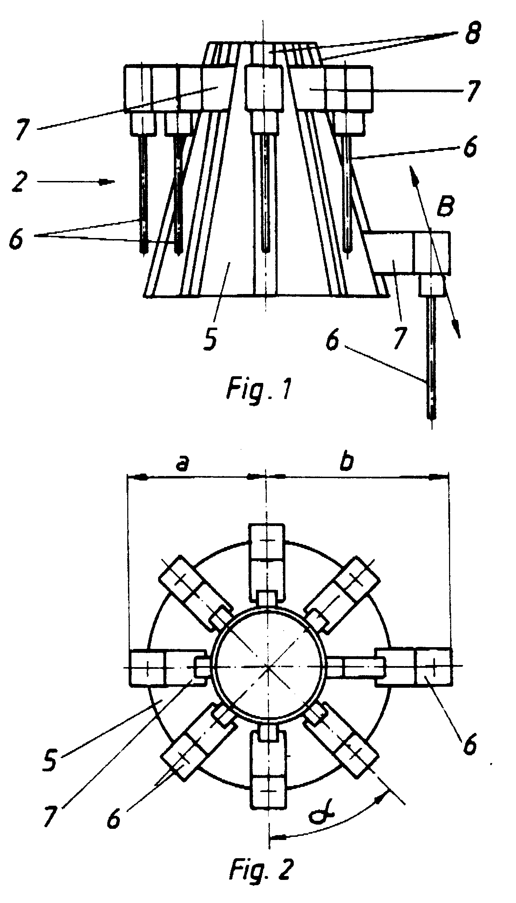

Gemäß Figur 1 weist die Bearbeitungseinheit 2 zum Bearbeiten von bspw. aus Kunststoffprofilen zusammengeschweißten Rahmen 1 einer Eckenputzmaschine einen als Revolverkopf ausgebildeten Werkzeugträger 5 auf, an welchem acht Bearbeitungswerkzeuge 6 angeordnet sind. Die Bearbeitungswerkzeuge 6 sind in Werkzeughaltern 7 aufgenommen, welche in schräg von oben nach unten verlaufenden Führungen 8 an dem Werkzeugträger 5 geführt sind. Dabei lassen sich die Werkzeughalter 7 mittels (nicht dargestellten) Antriebseinrichtungen in Richtung B gemäß Figur 1 verschieben, wodurch die Bearbeitungswerkzeuge 6 von einer zurückgezogenen Ausgangsstellung in eine Bearbeitungsposition nach radial außen verschiebbar sind.

Hierdurch können die Bearbeitungswerkzeuge 6 auf engstem Raum angeordnet werden, wie dies insbesondere aus Figur 2 ersichtlich ist, wo mit a der Radius des Werkzeugträgers 5 bei eingefahrenen Bearbeitungswerkzeugen 6 und im Vergleich dazu mit b die Quererstreckung des Werkzeugträgers 5 bei ausgefahrenem Werkzeug 6 angedeutet ist.

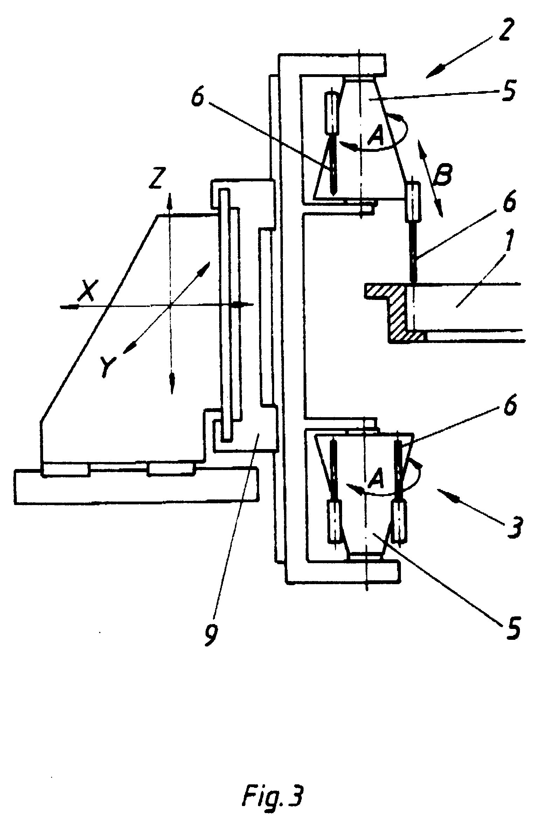

In den Figuren 1 und 2 sind die Bearbeitungswerkzeuge 6 nur schematisch dargestellt. Zur Bearbeitung eines Rahmenecks sind in den Werkzeughalter 7 selbstverständlich unterschiedliche Bearbeitungswerkzeuge 6, wie bspw. Profilfräser zur Bearbeitung des Außenecks, Abstechmesser zur Bearbeitung der Sichtflächen oder Bohrer für die Einbringung von Dichtungsnuten in das Rahmenprofil, vorgesehen. Durch Anwählen des jeweiligen Bearbeitungswerkzeuges 6 infolge Drehen des Werkzeugträgers 5 um die Achse A gemäß Figur 3, Betätigen der Antriebseinrichtung zum Verschieben des jeweiligen Bearbeitungswerkzeuges 6 in seine Bearbeitungsposition und Ingangsetzen der bei dem hier gewählten Ausführungsbeispiel vorgesehenen 3-Achsensteuerung wird das Rahmeneck abgearbeitet.

Wie insbesondere aus Figur 2 ersichtlich, sind die acht Bearbeitungswerkzeuge mit einem Winkel α von jeweils 45° an dem Werkzeugträger 5 gehalten, so daß bei den üblicherweise vorkommenden Rahmen mit einer 45°-Gehrung der Profilschenkel bereits diejenigen Bearbeitungswerkzeuge 6 ausgerichtet sind, welche, wie bspw. die Abziehmesser zur Bearbeitung der Sichtflächen gemäß 6 und 7, auf die Stoßstellen der Rahmenschenkel ausgerichtet sein müssen. Entsprechend ist auch der Werkzeugkopf bzw. der Werkzeugträger 5 lediglich mit einem Drehwinkel von 45° oder einem Vielfachen davon verdrehbar, so daß eine unmittelbare Zustellung der jeweiligen Bearbeitungswerkzeuge 6 erreicht ist.

Bei dem Ausführungsbeispiel gemäß Figur 3 sind zwei Bearbeitungseinheiten 2 und 3 in vertikaler Richtung übereinander angeordnet, so daß der Rahmen 1 entweder zeitgleich oder zeitversetzt auf seiner Ober- und Unterseite sowohl am Rahmenaußeneck als auch am Rahmeninneneck bearbeitet werden kann. Dabei sind die beiden Bearbeitungseinheiten 2 und 3 mittels eines Kreuzschlittens 9 in den beiden senkrecht aufeinanderstehenden Richtung X und Y und damit in einer Ebene parallel zur Rahmenebene verfahrbar. Zusätzlich sind die Bearbeitungseinheiten 2 und 3 in vertikaler Richtung unabhängig voneinander verfahrbar, so daß eine zeitgleiche Bearbeitung der Ober- und Unterseite des jeweiligen Rahmenecks ermöglicht ist. Ersichtlich ist es durch die 3-Achsensteuerungen für den Werkzeugträger 5 auch möglich, die Bearbeitungswerkzeuge 6 nicht nur in einer Diagonalen bzgl. des Rahmenecks, entsprechend der 45°-Gehrung der Rahmenschenkel, sondern auch in jeder anderen beliebigen Winkelstellung zu verfahren.

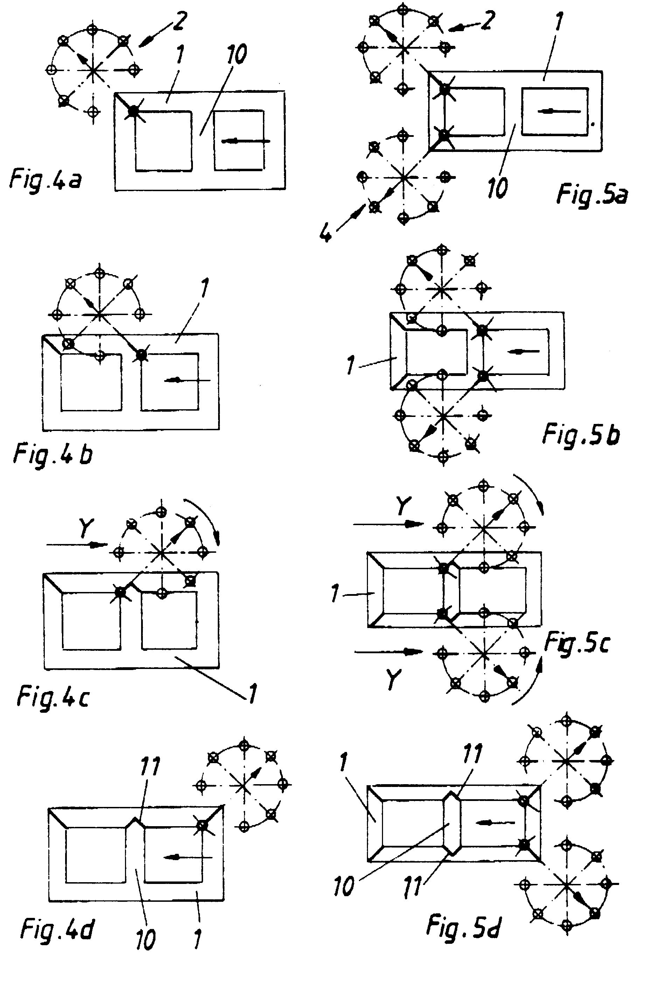

In Figuren 4a bis 4d ist die prinzipielle Arbeitsfolge für die Bearbeitung eines Fensterrahmens 1 mit Mittelsprosse 10 dargestellt. Im Bereich des Anschlusses der Mittelsprosse 10 an den Rahmen 1 ergibt sich eine sogenannte Kämpfer-Verbindungsstelle 11, bei welcher die Mittelsprosse 10 mit einer Spitze unter 45° in den äußeren Rahmen 1 eingesetzt bzw. eingeschweißt ist.

Gemäß Figur 4a wird der längs der Eckenputzmaschine transportierte Rahmen 1 in Pfeilrichtung soweit verschoben, daß das in Transportrichtung vorauseilende Rahmeneck sich in Höhe der Bearbeitungseinheit 2 befindet. Danach werden die für die Bearbeitung des Rahmenecks erforderlichen Bearbeitungswerkzeuge 6 in Einsatz gebracht werden. Dabei wird durch Drehen des Werkzeugträgers 5 das passende Bearbeitungswerkzeug 6 ausgewählt und durch Betätigen der (nicht dargestellten) Antriebseinrichtung in Bearbeitungsposition gebracht. Nunmehr wird dieses Bearbeitungswerkzeug 6 mittels der 3-Achsensteuerung zum Ausführen der Rahmenbearbeitung verfahren und nach Beendigung der Bearbeitung mittels der Antriebseinrichtung wieder in seine Ausgangsstellung am Werkzeugträger 5 zurückgezogen, um das nächste Bearbeitungswerkzeug 6 einzusetzen, bis das Rahmeneck abgearbeitet ist.

Sodann wird gemäß Figur 4b der Rahmen 1 mittels der Transporteinrichtung soweit verschoben, daß sich die Mittelsprosse 10 in Höhe der Bearbeitungseinheit 2 befindet, und zwar derart, daß dasjenige Inneneck der Kämpfer-Verbindungsstelle 11 bearbeitet werden kann, welches in Transportrichtung nachläuft. Während des Transportes des Rahmen 1 wird bereits das erforderliche Bearbeitungswerkzeug 6, bspw. für die Inneneck- oder Sichtflächenbearbeitung der Kämpfer-Verbindungsstelle 11, angewählt.

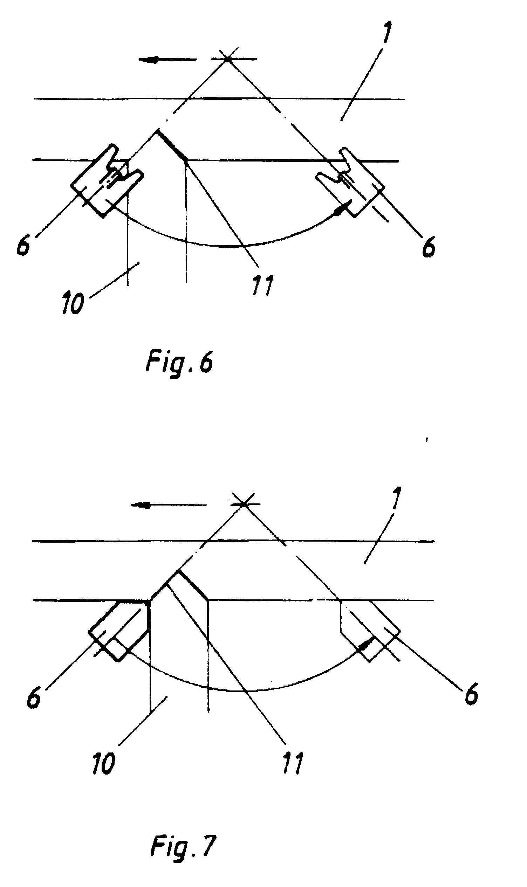

Gemäß Figur 4c wird sodann die Bearbeitungseinheit 2 in Y-Richtung verfahren, bis das zweite, in Transportrichtung des Rahmens 1 vorauseilende Inneneck der Kämpfer-Verbindungsstelle 11 bearbeitet werden kann. Zwischenzeitlich wird, wie in Figur 4c durch den gekrümmten Pfeil angedeutet, der Werkzeugträger 5 bei dem hier gewählten Ausführungsbeispiel um 90° verdreht, um das zuletzt benutzte Bearbeitungswerkzeug 6, bspw. für die Inneneck- oder die Sichtflächenbearbeitung, bereits zuzustellen. Dieser Zwischenschritt ist in Figur 6 für den Einsatz eines Sichtflächenmessers und in Figur 7 für die Zustellung des Abstechmessers für die Inneneckbearbeitung dargestellt und zeigt einen weiteren Vorteil der Ausbildung des Werkzeugträgers 5 als Revolverkopf. Hierdurch ist nämlich erreicht, daß allein durch Drehung des zuletzt benutzten Bearbeitungswerkzeuges 6 um 90° auch für die richtungs- und/oder profilbezogenen Bearbeitungswerkzeuge 6 schon ihre Zustellung zur jeweiligen Bearbeitungsstelle des Rahmens 1 erreicht ist. Auch bedarf es nicht einer zweizähligen Ausbildung derartiger für die Bearbeitung eines Rahmens 1 grundsätzlich erforderlichen richtungs- und formbezogenen Bearbeitungswerkzeuge wie bei den bekannten Eckenputzmaschinen. Hierfür genügt allein eine Rotation des Werkzeugträgers 5, um das entsprechende Bearbeitungswerkzeug 6 bspw. für Rahmen 1 mit unterschiedlichen Gehrungslagen einsetzen zu können.

Um auch das in Transportrichtung letzte Rahmeneck des Rahmens 1 zu bearbeiten, wird gemäß Figur 4d wiederum der Rahmen 1 verschoben, und zwar soweit, bis er sich mit seinem in Transportrichtung nachlaufenden Rahmeneck in Höhe der Bearbeitungseinheit 2 befindet, um schließlich durch Auswählen der erforderlichen Bearbeitungswerkzeuge 6 auch dieses Rahmeneck abzuarbeiten.

Die Ausführungsform gemäß Figuren 5a bis 5d unterscheidet sich von derjenigen gemäß Figuren 4a bis 4d nur dadurch, daß anstelle einer Einkopf-Bearbeitungseinheit 2 nunmehr zwei Bearbeitungseinheiten 2 und 4 zum gleichzeitigen Bearbeiten der beiden quer zur Transportrichtung gegenüberliegenden Rahmenecken vorgesehen sind. Ansonsten sind die Arbeitsläufe identisch. Bei einer derartigen Zweikopf-Maschine erweist sich die kompakte Bauform der Bearbeitungseinheiten 2, 4 von besonderem Vorteil, da auch Rahmen 1 mit geringen Querabmessungen zeitgleich bearbeitet werden können.

Selbstverständlich kann auch bei den Ausführungsbeispielen gemäß Figuren 4a bis 4d und 5a bis 5d die Bearbeitung sowohl der Oberseite als auch der Unterseite des Rahmens 1 durch eine Vorrichtung gemäß Figur 3 mit jeweils zwei Bearbeitungseinheiten 2 und 3 bzw. 4 und 3 durchgeführt werden.

### Bezugszeichenliste

- 1: Rahmen
- 2: Bearbeitungseinheit
- 3: Bearbeitungseinheit
- 4: Bearbeitungseinheit
- 5: Werkzeugträger, Revolverkopf
- 6: Bearbeitungswerkzeug
- 7: Werkzeughalter
- 8: Führung
- 9: Kreuzschlitten
- 10: Mittelsprosse
- 11: Kämpfer-Verbindungsstelle
- A: Drehachse
- B: Verschieberichtung
- X: Vorschubrichtung
- Y: Vorschubrichtung
- Z: Vorschubrichtung
- a: Radius
- b: seitliche Erstreckung
- α: Winkel

## Patentansprüche

1. Vorrichtung zum Bearbeiten der Eckenverbindungen von aus Profilstücken geschweißten Rahmen (1), wie bspw. Fenster- oder Türrahmen, mit wenigstens einer in eine Bearbeitungsposition bzgl. des Rahmens (1) zumindest in der Ebene (X, Y) parallel zur Rahmenebene verfahrbaren Bearbeitungseinheit (2) mit einem in Form eines Revolverkopfes ausgebildeten Werkzeugträger (5) und mehreren auf einem Kreisumfang am Werkzeugträger (5) angeordneten unterschiedlichen Bearbeitungswerkzeugen (6), welche durch Drehen des Werkzeugträgers (5) in eine Ausgangsposition gebracht werden, dadurch gekennzeichnet, daß die Bearbeitungswerkzeuge (6) von einer radial zurückgezogenen Ausgangsposition an dem Werkzeugträger (5) in eine radial äußere Bearbeitungsposition verschiebbar sind.

2. Vorrichtung nach Anspruch 1, dadurch gekennzeichnet, daß die Berabeitungswerkzeuge (6) in einem Winkel von α = 45° oder einem Vielfachen davon an dem Werkzeugträger (5) angeordnet sind.

3. Vorrichtung nach Anspruch 1 oder 2, dadurch gekennzeichnet, daß der Werkzeugträger (5) lediglich mit einem Drehwinkel von α = 45° und/oder einem Vielfachen davon verdrehbar ist.

4. Vorrichtung nach einem der Ansprüche 1 bis 3, dadurch gekennzeichnet, daß der Werkzeugträger (5) in drei senkrecht aufeinander stehenden Richtungen (X, Y, Z) verfahrbar ist.

5. Vorrichtung nach einem der Ansprüche 1 bis 4, dadurch gekennzeichnet, daß der Werkzeugträger (5) entlang der Längs- und Querseiten des Rahmens (1) verfahrbar ist.

6. Vorrichtung nach einem der Ansprüche 1 bis 5, dadurch gekennzeichnet, daß die Bearbeitungswerkzeuge (6), vorzugsweise lösbar, an Werkzeughaltern (7) angeordnet sind, welche in schräg von oben nach unten verlaufenden Führungen (8) mittels einer Antriebseinrichtung von der Ausgangsposition nach unten bzw. nach oben in die jeweilige Bearbeitungsposition verschiebbar sind.

7. Vorrichtung nach einem der Ansprüche 1 bis 6, dadurch gekennzeichnet, daß der Werkzeugträger (5) im Querschnitt konisch ausgebildet ist und die Führungen (8) für die Werkzeughalter (7) am bzw. im Mantel des Werkzeugträgers (5) vorgesehen sind.

8. Vorrichtung nach Anspruch 6 oder 7, dadurch gekennzeichnet, daß die Antriebseinrichtung für das Verschieben der Bearbeitungswerkzeuge (6) wenigstens einen, vorzugsweise zwei gegenüber dem Werkzeugträger (5) feststehend angeordnete Antriebseinheiten, bspw. pneumatisch betätigte Kolben-Zylinder-Anordnungen, aufweist, welche in einem Winkel von 90° zueinander angeordnet sind und deren Betätigungselemente zum Angreifen an dem jeweiligen Bearbeitungswerkzeug (6) ausgebildet sind.

9. Vorrichtung nach einem der Ansprüche 1 bis 8, dadurch gekennzeichnet, daß die Vorschubbewegung des Werkzeugträgers (5) mittels auf Schienen geführten Schlitten erfolgt.

10. Vorrichtung nach einem der Ansprüche 1 bis 9, dadurch gekennzeichnet, daß die Vorschubbewegung des Werkzeugträgers (5) in Richtung (Y) parallel zur Rahmenebene und senkrecht dazu (Z) durch einen Kreuzschlitten (9) erfolgt.

11. Vorrichtung nach einem der Ansprüche 1 bis 10, dadurch gekennzeichnet, daß für die Bearbeitung von Ober- und Unterseite des jeweiligen Rahmenecks zwei in Abstand voneinander angeordnete Bearbeitungseinheiten (2, 3) mit Werkzeugträger (5), Bearbeitungswerkzeugen (6) und Antriebseinheiten für die Vorschubbewegung vorgesehen sind.

12. Vorrichtung nach Anspruch 11, dadurch gekennzeichnet, daß die Werkzeugträger (5) der beiden Bearbeitungseinheiten (2, 3) an einem gemeinsamen Trägerteil angeordnet sind, welches mittels eines Antriebes wenigstens in der Ebene (X, Y) parallel zur Rahmenebene verfahrbar ist.

13. Vorrichtung nach einem der Ansprüche 11 oder 12, dadurch gekennzeichnet, daß die Bearbeitungseinheiten (2, 3) in Richtung (Z) senkrecht zur Rahmenebene unabhängig voneinander verfahrbar sind.

14. Vorrichtung nach einem der Ansprüche 1 bis 13, dadurch gekennzeichnet, daß sie wenigstens als Zweikopf-, vorzugsweise als Vierkopfmaschine, ausgebildet ist mit seitlich des Rahmens (1) angeordneten Bearbeitungseinheiten (2, 3, 4).

15. Verwendung der Vorrichtung nach einem der Ansprüche 1 bis 14 zur Bearbeitung von plattenförmigen Elementen, wie bspw. Türen, Regelwänden und dgl.

## Claims

1. Device for machining the corner joints of frames (1), which are welded together from section members, for example frames of windows or doors, with at least one machining unit (2), which is movable in at least the plane (X, Y) parallel to the plane of the frame into a machining position with reference to the frame, with a tool carrier (5) constructed in the form of a turret head and several different machining tools (6), which are arranged on a circular circumference at the tool carrier (5) and are brought into an initial position by rotation of the tool carrier (5), characterised thereby, that the machining tools (6) are displaceable from a radially retracted initial position at the tool carrier (5) into a radially outer machining position.

2. Device according to claim 1, characterised thereby, that the machining tools (6) are arranged at the tool carrier (5) at an angle α = 45° or a multiple thereof.

3. Device according to claim 1 or 2, characterised thereby, that the tool carrier (5) is rotatable merely through a rotary angle α = 45° and/or a multiple thereof.

4. Device according to one of the claims 1 to 3, characterised thereby, that the tool carrier (5) is movable in three mutually perpendicular directions (X, Y, Z).

5. Device according to one of the claims 1 to 4, characterised thereby, that the tool carrier (5) is movable along the longitudinal and transverse sides of the frame (1).

6. Device according to one of the claims 1 to 5, characterised thereby, that the machining tools (6) are arranged, preferably to be detachable, at tool holders (7), which are displaceable in guides (8), which extend obliquely downwards from above, downwardly or upwardly from the initial position into the respective machining position by means of a drive equipment.

7. Device according to one of the claims 1 to 6, characterised thereby, that the tool carrier (5) is constructed to be conical in cross-section and the guides (8) for the tool holders (7) are provided in or at the casing of the tool carrier (5).

8. Device according to claim 6 or 7, characterised thereby, that the drive equipment for the displacement of the machining tools (6) comprises at least one, preferably two drive units which are arranged to be stationary relative to the tool carrier (5) and are, for example, pneumatically actuated piston-cylinder arrangements which are arranged at an angle of 90° each to the other and the actuating elements of which are formed for engaging at the respective machining tool (6).

9. Device according to one of the claims 1 to 8, characterised thereby, that the advancing movement of the tool carrier (5) takes place by means of sliding carriages guided on rails.

10. Device according to one of the claims 1 to 9, characterised thereby, that the advancing movement of the tool carrier (5) takes place in the direction (Y) parallel to the plane of the frame and perpendicular thereto (Z) by a cross slide (9).

11. Device according to one of the claims 1 to 10, characterised thereby, that two machining units (2, 3), which are each arranged at a spacing from the other, with tool carriers (5), machining tools (6) and drive units for the advancing movement are provided for the machining of the upper side and the underside of the respective frame corner.

12. Device according to claim 11, characterised thereby, that the tool carriers (5) of both the machining tools (2, 3) are arranged at a common carrier part which is movable in at least the plane (X, Y) parallel to the plane of the frame by means of a drive.

13. Device according to claim 11 or 12, characterised thereby, that the machining units (2, 3) are movable each independently of the other in the direction (Z) perpendicular to the plane of the frame.

14. Device according to one of the claims 1 to 13, characterised thereby, that it is constructed as at least twin-head machine, preferably as four-head machine, with machining units (2, 3, 4) arranged laterally of the frame (1).

15. Use of the device according to one of the claims 1 to 14 for the machining of plate-shaped elements such as, for example, doors, shelf unit walls and the like.

## Revendications

1. Dispositif pour l'usinage des assemblages d'angle de châssis (1), tels que par exemple châssis de fenêtre ou châssis de porte, soudés à partir de tronçons de profilé, comprenant au moins une unité d'usinage (2) qui est déplaçable dans une position d'usinage par rapport au châssis (1) au moins dans le plan (X, Y) parallèle au plan du châssis et qui comprend un support d'outil (5) réalisé sous forme d'une tête tourelle et plusieurs outils d'usinage (6) différents qui sont disposés suivant une surface périphérique de révolution sur le support d'outil (5) et qui sont amenés dans une position initiale par rotation du support d'outil (5), caractérisé en ce que les outils d'usinage (6) sont déplaçables d'une position initiale radialement en retrait sur le support d'outil (5) à une position d'usinage radialement extérieure.

2. Dispositif suivant la revendication 1, caractérisé en ce que les outils d'usinage (6) sont disposés suivant un angle de α = 45° ou un multiple de cette valeur sur le support d'outil (5).

3. Dispositif suivant la revendication 1 ou 2, caractérisé en ce que le support d'outil (5) peut pivoter uniquement d'un angle de rotation de α = 45° et/ou d'un multiple de cette valeur.

4. Dispositif suivant l'une des revendications 1 à 3, caractérisé en ce que le support d'outil (5) est déplaçable suivant trois directions (X, Y, Z) perpendiculaires entre elles.

5. Dispositif suivant l'une des revendications 1 à 4, caractérisé en ce que le support d'outil (5) est déplacable le long des côtés longitudinaux et des côtés transversaux du châssis (1).

6. Dispositif suivant l'une des revendications 1 à 5, caractérisé en ce que les outils d'usinage (6) sont disposés, de préférence d'une manière amovible, sur des porte-outil (7) qui, au moyen d'un dispositif d'entraînement, sont déplaçables dans des guides (8) s'étendant d'une manière inclinée de haut en bas, de la position initiale vers le bas ou vers le haut à la position d'usinage respective.

7. Dispositif suivant l'une des revendications 1 à 6, caractérisé en ce que le support d'outil (5) a une forme conique en section transversale et les guides (8) associés aux porte-outil (7) sont prévus sur ou dans la surface périphérique du support d'outil (5).

8. Dispositif suivant la revendication 6 ou 7, caractérisé en ce que le dispositif d'entraînement prévu pour le déplacement des outils d'usinage (6) comprend au moins une, de préférence deux, unités d'entraînement, par exemple des vérins à actionnement pneumatique, qui sont disposées d'une manière fixe par rapport au support d'outil (5) et suivant un angle de 90° l'une par rapport à l'autre et dont des éléments d'actionnement sont agencés pour attaquer respectivement l'outil d'usinage (6) associé .

9. Dispositif suivant l'une des revendications 1 à 8, caractérisé en ce que le mouvement d'avance du support d'outil s'effectue au moyen de chariots guidé sur des rails.

10. Dispositif suivant l'une des revendications 1 à 9, caractérisé en ce que le mouvement d'avance du support d'outil (5) suivant une direction (Y) parallèle au plan du châssis et une direction (Z) perpendiculaire à celui-ci s'effectue au moyen d'un chariot à déplacements en croix (9).

11. Dispositif suivant l'une des revendications 1 à 10, caractérisé en ce que, pour l'usinage d'une face supérieure et d'une face inférieure de l'angle de châssis considéré, il est prévu deux unités d'usinage (2, 3) disposées à distance l'une de l'autre et comportant un support d'outil (5), des outils d'usinage (6) et des unités d'entraînement pour le mouvement d'avance.

12. Dispositif suivant la revendication 11, caractérisé en ce que les supports d'outil (5) des deux unités d'usinage (2, 3) sont disposés sur une partie commune de support qui est déplaçable au moyen d'un entraînement au moins dans le plan (X, Y) parallèle au plan du châssis.

13. Dispositif suivant l'une des revendications 11 ou 12, caractérisé en ce que les unités d'usinage (2, 3) sont déplaçables indépendamment l'une de l'autre suivant la direction (Z) perpendiculaire au plan du châssis.

14. Dispositif suivant l'une des revendications 1 à 13, caractérisé en ce qu'il est réalisé au moins sous forme d'une machine à deux têtes, de préférence sous forme d'une machine à quatre têtes, comportant des unités d'usinage (2, 3, 4) disposées latéralement par rapport au châssis (1).

15. Utilisation du dispositif suivant l'une des revendications 1 à 14 pour l'usinage d'éléments en forme de plaque, tels que par exemple portes, parois de rayonnage et analogues.
